# FASCICULE DE BREVET EUROPEEN

(11) **EP 1 593 970 B1**
(45) Date de publication et mention de la délivrance du brevet: **23.10.2013**
(21) Numéro de dépôt: 05103642.4
(22) Date de dépôt: 02.05.2005
(51) Int. Cl.: G01P 15/13

(54) **Accéléromètre en boucle fermée avec detection d'erreur**
Rückgekoppelter Beschleunigungsaufnehmer mit Fehlererkennung
Closed loop accelerometer with error detection

(30) Priorité: 04.05.2004 FR 0404802
(43) Date de publication de la demande: 09.11.2005
(73) Titulaire: Commissariat à l'Énergie Atomique et aux Énergies Alternatives, 75015 Paris (FR)
(72) Inventeur: Condemine, Cyril, 38100, Grenoble (FR); Delorme, Nicolas, 38000, Grenoble (FR); Belleville, Marc, 38120, Saint-Egreve (FR)
(74) Mandataire: Ahner, Philippe

(56) Documents cités:
- US-A- 5 583 290
- US-A1- 2003 140 699
- KULAH H ET AL: "A CMOS switched-capacitor interface circuit for an integrated accelerometer" PROCEEDINGS OF THE 43RD. IEEE MIDWEST SYMPOSIUM ON CIRCUITS AND SYSTEMS. MWSCAS 2000. LANSING, MI, AUG. 8 - 11, 2000, MIDWEST SYMPOSIUM ON CIRCUITS AND SYSTEMS, NEW YORK, NY : IEEE, US, vol. VOL. 1 OF 3, 8 août 2000 (2000-08-08), pages 244-247, XP010558120 ISBN: 0-7803-6476-7
- PAEMEL VAN M: "INTERFACE CIRCUIT FOR CAPACITIVE ACCELEROMETER" SENSORS AND ACTUATORS, ELSEVIER SEQUOIA S.A. LAUSANNE, CH, vol. 17, no. 3/4, 1 mai 1989 (1989-05-01), pages 629-637, XP000081664

## Description

### DOMAINE TECHNIQUE ET ART ANTERIEUR

L'invention concerne le domaine de la mesure accélérométrique.

Ce type de mesure permet de convertir une accélération en un signal électrique analogique ou numérique.

Elle s'applique à des domaines variés tels que l'automobile ou l'avionique.

Le document de Haluk Kulah et al. Intitulé "A CMOS switched-capacitor interface circuit for an integrated accelerometer", Procedings of the 43rd-IEEE Midraest Symposium on Circuits and Systems, 244-7, Vol.1. décrit un accéléromètre mettant en oeuvre un correcteur numérique qui permet d'augmenter significativement la rapport signal sur bruit.

Les dispositifs de mesure accélérométrique à rétroaction numérique induisent une variation de la raideur de l'accéléromètre par ajout d'une raideur électrostatique négative. Cette raideur est créée par les tensions appliquées sur les peignes de l'accéléromètre pour la lecture comme pour la rétroaction.

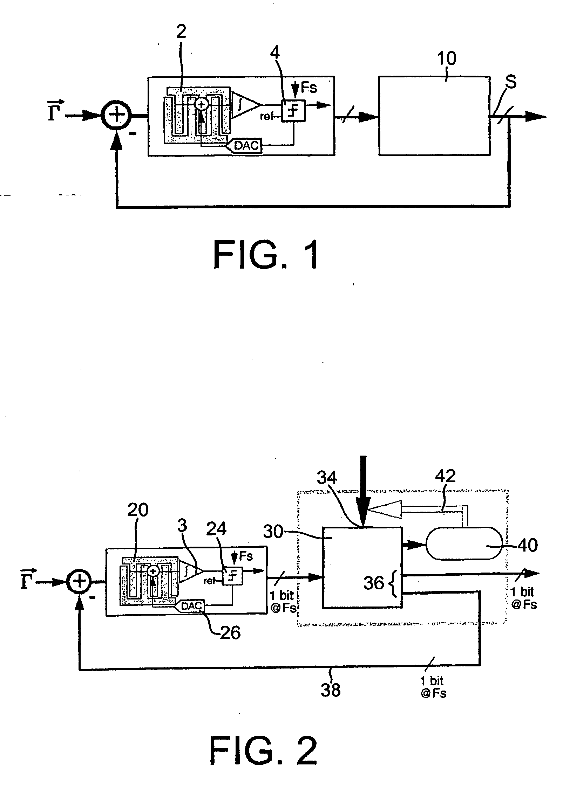

La figure 1 représente une architecture d'accéléromètre 2 à retour numérique, permettant la mesure d'accélérations Γ : un modulateur sigma-delta 4 assure la lecture des capacités variables d'un accéléromètre 2, ainsi que l'application de tensions électriques. Ces tensions électriques sont converties par l'accéléromètre 2 en une force électrostatique qui est fonction du retour d'un correcteur 10.

Ce dernier permet de maintenir l'accéléromètre 2 dans sa positon centrale. La sortie du système correspond à la sortie S de ce correcteur 10.

La valeur moyenne de cette sortie S représente l'accélération : on applique, à une très grande fréquence f1, une force électrostatique attractive sur l'un des côtés de l'accéléromètre 2 pour le ramener dans sa position centrale.

La fréquence f2 de coupure de l'accéléromètre 2 étant plus faible que f1, celui-ci filtre ce train d'impulsions et voit une valeur moyenne à ses bornes.

Un problème de cette mesure en boucle fermée est la saturation du système suite à une accélération ou un choc hors de la gamme de mesure. Cette gamme dépend des caractéristiques physiques de l'accéléromètre 2 (raideur, masse, amortissement,...) et des limites technologiques en tension du démodulateur 4.

Cette saturation provoque une erreur de calcul dans le correcteur numérique 10, pouvant causer un collage des branches du peigne et une perte de fonctionnalité temporaire, jusqu'au décollage, ou permanente (collage définitif, cassure, saturation...).

Si ceci se produit, le système est complètement désactivé et ne mesure plus l'accélération : on a donc une perte complète de la fonction de mesure et de la mesure associée.

Le document US 2003/140699 décrit un accéléromètre muni d'une masse mobile entre des plaques; une boucle de rétroaction active un actionneur agissant sur la masse pour la ramener dans une position d'équilibre. Un moyen électronique de commande contrôle le signal de l'actionneur de la boucle de rétroaction et ouvre celle-ci en cas de détection d'erreurs sur la boucle de rétroaction.

Il se pose donc le problème de trouver un accéléromètre et un procédé de mesure d'accélérations permettant, en cas d'erreur du système, ou en cas de saturation, de résoudre ce genre de situation, et notamment de continuer à faire fonctionner le système.

Il se pose également le problème d'assurer une fonction de mesure d'un signal d'accélération ou d'une accélération en cas de dysfonctionnement d'un accéléromètre, dû par exemple à une saturation.

### EXPOSÉ DE L'INVENTION

L'invention concerne en particulier un accéléromètre numérique en boucle fermée, dont le fonctionnement peut être dégradé, par exemple en boucle ouverte, lorsqu'une erreur de fonctionnement de l'accéléromètre apparaît.

L'invention concerne d'abord un dispositif de mesure accélérométrique à boucle de retour selon la revendication 1.

Un dispositif de mesure accélérométrique selon l'invention permet d'assurer une fonction de mesure de l'accélération, même sous forme dégradée, en cas d'erreur dans le fonctionnement de l'accéléromètre.

L'erreur est une saturation. Les moyens pour détecter une erreur de fonctionnement de l'accéléromètre détectent un état de saturation de l'accéléromètre.

Quant à l'état de fonctionnement modifié, il s'agit d'un état de fonctionnement en boucle ouverte. Les moyens pour effectuer une modification du fonctionnement des moyens de correction permettent une ouverture de la boucle de retour de l'accéléromètre.

L'invention permet alors de profiter des avantages de la boucle fermée et de la robustesse du fonctionnement en boucle ouverte.

Ces moyens peuvent permettre de modifier un ou plusieurs paramètres de fonctionnement desdits moyens de correction.

Les moyens pour détecter une erreur de fonctionnement de l'accéléromètre, et les moyens pour effectuer une modification du fonctionnement des moyens de correction peuvent être situés en sortie de ces moyens de correction.

Le dispositif peut en outre comporter des moyens pour effectuer une deuxième modification du fonctionnement des moyens de correction, depuis leur état de fonctionnement modifié vers un état initial. Cette deuxième modification est une fermeture de la boucle depuis un état de boucle ouverte dû à la détection de saturation vers un état de boucle fermée.

Cette deuxième modification des moyens de correction peut être faite en une étape.

En variante, cette deuxième modification du fonctionnement des moyens de correction peut être faite en plusieurs étapes.

La deuxième modification du fonctionnement des moyens de correction peut être faite par modification du gain de la boucle de retour.

### BREVE DESCRIPTION DES FIGURES

- La figure 1 représente un accéléromètre numérique, sans détection d'erreur,
- La figure 2 représente un accéléromètre numérique selon l'invention,
- La figure 3 représente un mode de réalisation de moyens correcteurs,
- Les figures 4A - 4E représentent des résultats de simulation avec un dispositif selon l'invention.

### EXPOSÉ DÉTAILLÉ DE MODES DE RÉALISATION PARTICULIERS

Un système accélérométrique à retour numérique selon l'invention, va être décrit en liaison avec la figure 2.

Un tel système comporte un accéléromètre 20, et des moyens tels qu'un démodulateur ∑-Δ permettant la lecture des capacités variables de l'accéléromètre, ainsi que l'application de tensions électriques, comprenant par exemple un quantificateur 24, un convertisseur numérique - analogique 26 et un intégrateur 23 en sortie de l'accéléromètre.

Des moyens numériques de correction 30 permettent d'engendrer, à partir du signal mesuré par l'accéléromètre, ou d'un signal représentatif de ce signal mesuré, un signal de correction de la position de l'accéléromètre, et de maintenir l'accéléromètre 20 dans sa position centrale, par l'intermédiaire d'une boucle de retour 38.

Le correcteur numérique 30 est un dispositif géré par des coefficients qui peuvent être mémorisés et qui réalisent des fonctions. Selon la valeur donnée à ces coefficients, on peut notamment obtenir :
- une fonction unitaire,
- ou une fonction à gain 2, 3,...,
- ou une ouverture de la boucle,
- etc....

Des coefficients initiaux peuvent être appliqués à une entrée 34 de ces moyens 30 correcteurs

Ces coefficients initiaux sont déterminés de façon à ce que, en sortie, les tensions appliquées à l'accéléromètre (par le retour 38) soient supportées par ce dernier et par le circuit électronique ; ces coefficients sont optimisés pour maintenir la masse en position centrale dans la gamme de fonctionnement fixée au départ.

La sortie 36 des moyens correcteurs 30 est par exemple codée sur un bit (ce qui correspond alors à une modulation tout ou rien).

La valeur moyenne de cette sortie représente l'accélération : on applique, par la boucle de retour 38, de préférence à une très grande fréquence, une force électrostatique attractive sur l'un des côtés de l'accéléromètre pour le ramener dans sa positon centrale.

Selon l'invention, des moyens 40 de détection d'erreur permettent de détecter une erreur dans le fonctionnement normal de l'accéléromètre, et notamment un état de saturation des moyens 30.

Dans un tel cas, l'accéléromètre est soumis à des forces hors de la gamme prévue : la masse de l'accéléromètre part en butée. Les grandeurs électriques prennent des valeurs hors gamme et, par exemple, tous les coefficients passent à 1.

Ces moyens 40 peuvent être disposés en sortie du correcteur 30.

Lors d'une détection d'erreur, des moyens 42 permettent de modifier les coefficients introduits en entrée des moyens correcteurs 30. Par exemple, les coefficients initiaux sont dans une mémoire et une fonction logique vient les modifier. Cette fonction logique peut être soit câblée en dur, soit écrite dans un programme.

En particulier, une modification qu'il est ainsi possible d'obtenir est une suppression du retour 38 par modification du résultat de la fonction logique qui gère la sortie 38. La fonction logique est par exemple du type :
- SI saturation détectée,
- ALORS signal en sortie de 38 = 0

Par exemple, les coefficients du correcteur 30 sont modifiés pour obtenir, en sortie 36, une fonction unitaire qui permet de supprimer l'effet du retour : le système passe alors en boucle ouverte.

L'effet du correcteur peut donc être annulé (on mentionnera dans la suite une « remise à zéro du correcteur ») lorsqu'une saturation est détectée.

La sortie 36 est alors égale à la sortie des moyens 24 et le retour devient nul : on ne retourne plus d'information vers l'accéléromètre 20.

La raideur résultante (mécanique moins électrostatique) de ce dernier est alors plus grande : il n'y a plus de tension de contre-réaction appliquée sur les peignes de l'accéléromètre ; la raideur électrostatique négative diminue donc.

Cette raideur devient seulement fonction des tensions de lecture, beaucoup plus petites que les tensions d'actionnement.

Le dispositif ou le MEMS accélérométrique est alors plus raide, et la pleine échelle en entrée devient alors plus grande.

Le système ne sature plus, et l'accélération est mesurée en boucle ouverte.

Les performances de mesure sont alors moins bonnes, à causes des non-linéarités créées par le mouvement des masses, mais plus robustes. Les masses en mouvement sont par exemple sous forme de peignes encastrés. La fonctionnalité de mesure est cependant conservée, même avec des performances moins bonnes qu'en boucle fermée.

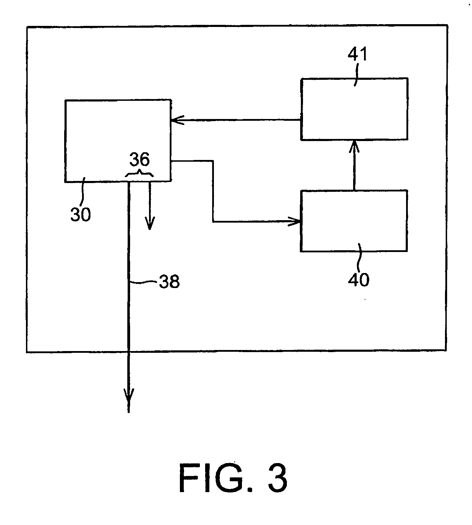

Un mode de réalisation des moyens de correction des coefficients est illustré en figure 3 : sur cette figure, la référence 40 désigne encore des moyens de détection de saturation en sortie des moyens 30 de correction d'erreur. Des moyens 41 permettent de réaliser une correction comme expliquée ci-dessus. Ces moyens 41 réalisent par exemple une modification des coefficients initiaux mémorisés, ou des fonctions logiques.

Plus généralement, une erreur de fonctionnement de l'accéléromètre peut être détectée par les moyens 40, qui permettent alors aux moyens 41 de modifier les paramètres ou l'état de fonctionnement.

Afin de retrouver les performances initiales du circuit (bande passante, pleine échelle, rapport signal sur bruit, et THD, ou distorsion totale d'harmonie), le système va essayer de refermer la boucle 38 pour revenir au fonctionnement nominal ou initial.

Une solution de fermeture de la boucle consiste à rétablir, à l'aide des moyens 41 et 42, l'état initial du correcteur, par exemple à reprogrammer les moyens correcteurs 30 avec les valeurs initiales de coefficients. Ce peut être entre deux coups d'horloge du modulateur 24.

Le retour à l'état initial des moyens correcteurs 30 se fait alors en une seule étape.

Cependant, cette solution diminue les chances de retourner à un état stable car, en réinitialisant le retour, on modifie à nouveau la raideur mécanique, entraînant ainsi une oscillation avant le retour à un état stable. Cette oscillation peut conduire à nouveau à une saturation.

Une autre solution, plus avantageuse, est donc de rétablir progressivement, par étapes successives, l'état initial ou les coefficients initiaux, mais cette fois en modifiant progressivement la sensibilité du correcteur 30 suivant les mouvements de la masse de l'accéléromètre. Par exemple, on part d'une valeur faible des coefficients pour, progressivement (en 3 étapes ou sauts par exemple), retourner vers l'état initial ou vers les coefficients initiaux.

Selon un exemple on part de la fonction unitaire, pour laquelle le correcteur est insensible aux mouvements de l'accéléromètre (retour nul) : S = 1 X E. On passe alors, par exemple (et de façon simplifiée), à S = 2 X E puis à 3 X E, ...etc. On peut aussi tenir compte de la fréquence des mouvements lors de ce retour au gain normal.

Un exemple de procédé selon l'invention est donc le suivant :
- Détection d'une saturation dans la partie numérique,
- Ouverture de la boucle 38: cette boucle de retour est annulée et les coefficients des moyens correcteurs 30 sont modifiés,
- remise à zéro (RAZ) unitaire des moyens correcteurs 30,
- Mesure en boucle ouverte,
- Essai périodique de fermeture de la boucle ouverte, puis retour à la mesure en boucle fermée.

L'invention permet de toujours mesurer l'accélération. On ne perd jamais la fonctionnalité de mesure de l'accéléromètre, mais on dégrade ses performances, et en particulier le rapport signal/bruit SNR (la fonction de transfert de l'accéléromètre n'entre plus en jeu dans le calcul du bruit) et la THD (les capacités à entrefer variables sont particulièrement non-linéaires et créent donc une distorsion importante).

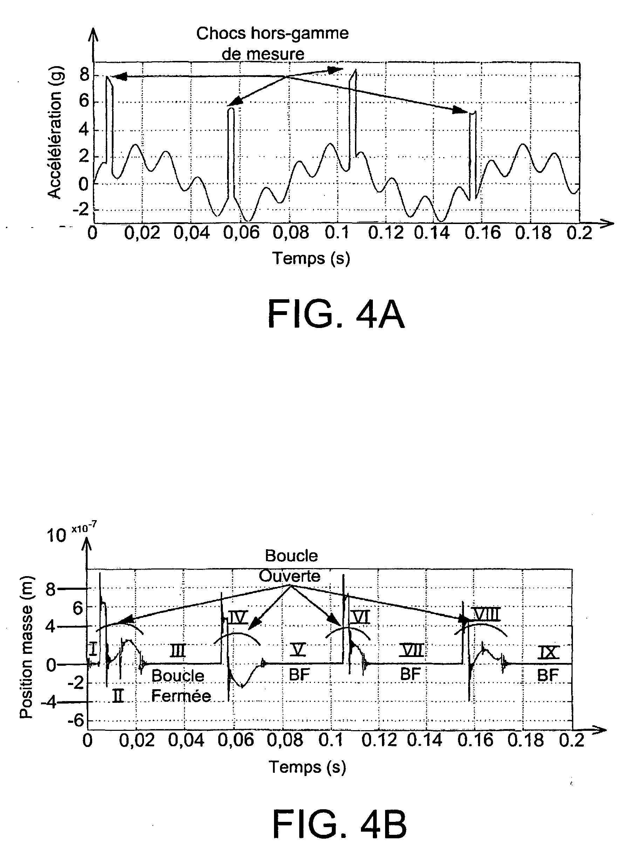

Les figures 4A - 4E illustrent des résultats de simulations.

La figure 4A représente le signal d'entrée de l'accéléromètre (signal à mesurer).

Il s'agit ici d'une sinusoïde, dont l'amplitude est dans la gamme de mesure du système en boucle fermée.

A ce signal, sont ajoutés des chocs hors de la gamme de mesure.

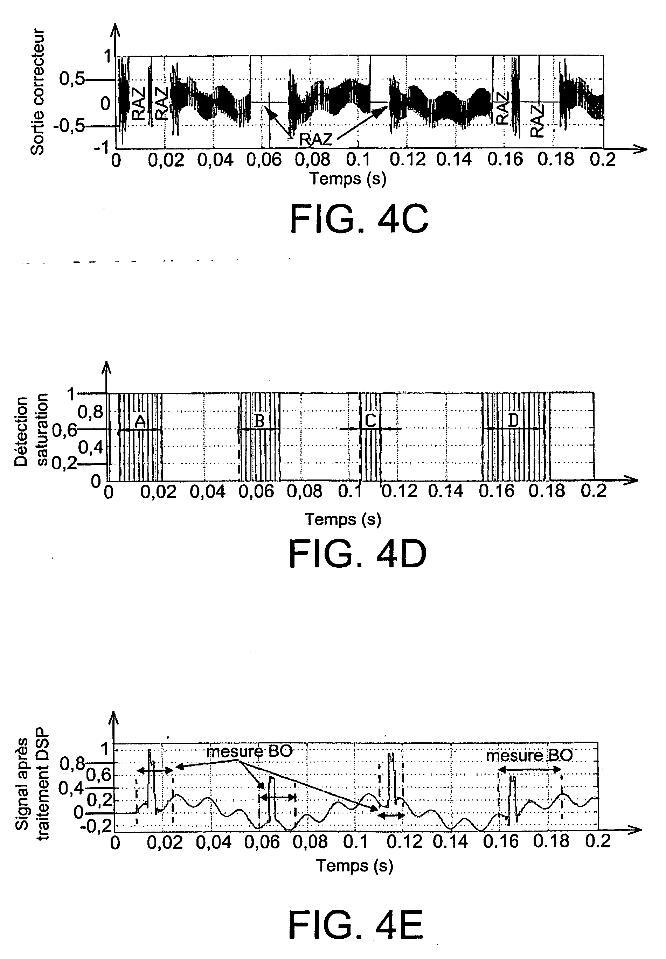

La figure 4B représente la position de la masse de l'accéléromètre, la figure 4C le signal de sortie des moyens correcteurs 30.

Sur la figure 4D sont représentées les zones A,B,C,D de détection de saturation.

Le système fonctionne très bien en boucle fermée (mouvement de la masse minimal, sortie du correcteur valide, zone I de la figure 4B), jusqu'aux premier chocs.

Le système en boucle fermée part en saturation (voir figure 4D, zone A) et la masse va toucher les butées de protection de l'accéléromètre (zone II de la figure 4B).

Le système détecte la saturation et passe en boucle ouverte : le mouvement de la masse n'est alors plus contrôlé et la mesure est dégradée, mais fonctionnelle. Le système essaie périodiquement de refermer la boucle, comme indiqué par les zones RAZ de la figure 4C.

La boucle se referme (zone III de la figure 4B) et le système retrouve son état initial en boucle fermée.

Sur la figure 4B sont identifiées d'autres zones de fonctionnement en boucle ouverte (IV, VI, VIII) et en boucle fermée BF (V, VII, IX).

La courbe de la figure 4E représente la sortie sigma-delta décimée et filtrée (filtres numériques du codage sigma-delta).

On retrouve la sinusoïde majoritairement mesurée en boucle fermée ainsi que les pics hors gamme, mesurés en boucle ouverte (BO). On a bien maintenu la fonctionnalité de la mesure, même pour des chocs hors gamme de mesure.

La solution proposée présente donc les performances de la boucle fermée et la robustesse de la boucle ouverte.

## Revendications

1. Dispositif de mesure accélérométrique à boucle de retour comportant :
- un accéléromètre (20),
- un correcteur (30) pour engendrer un signal de correction pour corriger la position de l'accéléromètre
- une boucle de retour (38) pour appliquer ce signal de correction à l'accéléromètre,
le dispositif étant **caractérisé par**
- un détecteur (40) pour détecter un état de saturation de l'accéléromètre en fonctionnement, et
- des moyens pour ouvrir la boucle de retour lorsque la saturation de l'accéléromètre est détectée.

2. Dispositif selon la revendication 1, comportant en outre des moyens (40, 41, 42) pour fermer la boucle de retour depuis un état de boucle ouverte dû à la détection de saturation vers un état de boucle fermée.

3. Dispositif selon la revendication 1 ou 2 dans lequel la fermeture ou l'ouverture de la boucle de retour (38) est obtenue par des moyens modifiant des coefficients dudit correcteur (30).

4. Dispositif selon la revendication 1 ou 2, dans lequel le détecteur (40) de saturation de l'accéléromètre est situé en sortie dudit correcteur.

5. Dispositif selon la revendication 2, dans lequel les moyens (40, 41, 42) pour fermer la boucle de retour depuis un état de boucle ouverte dû à la détection de saturation vers un état de boucle fermée ferment la boucle en une seule étape par modifications des coefficients du correcteur (30) de sorte à rétablir des coefficients initiaux du correcteur.

6. Dispositif selon la revendication 2, dans lequel les moyens (40, 41, 42) pour fermer la boucle de retour depuis un état de boucle ouverte dû à la détection de saturation vers un état de boucle fermée ferment la boucle en plusieurs étapes par rétablissement des coefficients initiaux du correcteur par étapes successives.

7. Dispositif selon la revendication 6, dans lequel les moyens (40, 41, 42) pour fermer la boucle de retour depuis un état de boucle ouverte dû à la détection de saturation vers un état de boucle fermée ferment la boucle par modification progressive du gain de la boucle de retour vers un gain normal.

8. Dispositif selon l'une des revendications 1 à 7, dans lequel dans un état de boucle ouverte après la détection d'une saturation, l'accélération est mesurée en boucle ouverte.

## Patentansprüche

1. Beschleunigungsmessvorrichtung mit Rückkopplungsschleife, enthaltend:
- einen Beschleunigungsmesser (20),
- ein Korrekturglied (30) zum Erzeugen eines Korrektursignals, um die Stellung des Beschleunigungsmessers zu korrigieren,
- eine Rückkopplungsschleife (38), um dieses Korrektursignal an den Beschleunigungsmesser anzulegen, wobei die Vorrichtung **gekennzeichnet ist durch**
- einen Sensor (40) zum Erfassen von einem Sättigungszustand des Beschleunigungsmessers im Betrieb und
- Mittel zum Öffnen der Rückkopplungsschleife, wenn die Sättigung des Beschleunigungsmessers erfasst ist.

2. Vorrichtung nach Anspruch 1, ferner enthaltend Mittel (40, 41, 42), um die Rückkopplungsschleife aus einem offenen Zustand, der auf die Erfassung der Sättigung zurückzuführen ist, in einen geschlossenen Zustand zum schließen.

3. Vorrichtung nach Anspruch 1 oder 2, wobei das Schließen bzw. Öffnen der Rückkopplungsschleife (38) über Mittel erhalten wird, welche Koeffizienten des Korrekturglieds (30) ändern.

4. Vorrichtung nach Anspruch 1 oder 2, wobei der Sensor (40) zum Erfassen der Sättigung des Beschleunigungsmessers sich am Ausgang des Korrekturglieds befindet.

5. Vorrichtung nach Anspruch 2, wobei die Mittel (40, 41, 42) zum Schließen der Rückkopplungsschleife aus einem geöffneten Zustand, der auf die Erfassung der Sättigung zurückzuführen ist, in einen geschlossenen Zustand die Schleife in nur einem Schrift durch Änderungen der Koeffizienten des Korrekturglieds (30) schließen, so dass wieder ursprüngliche Koeffizienten des Korrekturglieds hergestellt werden.

6. Vorrichtung nach Anspruch 2, wobei die Mittel (40, 41, 42) zum Schließen der Rückkopplungsschleife aus einem offenen Zustand, der auf die Erfassung der Sättigung zurückzuführen ist, in einen geschlossenen Zustand die Schleife in mehreren Schritten durch Wiederherstellung der ursprünglichen Koeffizienten des Korrekturglieds in aufeinanderfolgenden Schritten schließen.

7. Vorrichtung nach Anspruch 6, wobei die Mittel (40, 41, 42) zum Schließen der Rückkopplungsschleife aus einem offenen Zustand, der auf die Erfassung der Sättigung zurückzuführen ist, in einen geschlossenen Zustand die Schleife durch progressive Änderung der Verstärkung der Rückkopplungsschleife zu einer normalen Verstärkung hin schließen.

8. Vorrichtung nach einem der Ansprüche 1 bis 7, wobei in einem offenen Schleifenzustand nach Erfassung einer Sättigung die Beschleunigung in offener Schleife gemessen wird.

## Claims

1. Accelerometric measurement device with return loop comprising:
- an accelerometer (20),
- a corrector (30), to generate a signal for correction of the position of the accelerometer,
- a return loop (38) to apply this correction signal to the accelerometer,
the device being **characterized in that**
- a detector (40) to detect a saturation state of the accelerometer in operation,
- means opening the return loop when the saturation of the accelerometer is detected.

2. Device with according to claim 1, comprising further means (40, 41, 42) to close the return loop from a state in which the loop is opened due to the saturation detection to a close loop state.

3. device according to claim 1 or 2, in which the return loop (38) is closed or opened by means modifying operating parameters of said corrector (30).

4. Device according to claim 1 or 2, in which the detector (40) to detect a saturation state of the accelerometer is at the output from this corrector.

5. Device according to claim 2, in which means (40, 41, 42) to close the return loop from a state in which the loop is opened due to the saturation detection to a state in which the loop is closed, close the loop in a single step by modifying parameters of the said corrector (30) in order to restore the initial coefficient of the corrector.

6. Device according to claim 2, in which means (40, 41, 42) to close the return loop from a state in which the loop is opened due to the saturation detection to a state in which the loop is closed, close the loop in a single step by modifying parameters of the said corrector (30) in several steps in order by restoring the initial coefficient of the corrector in successive steps.

7. Device according to claim 6, in which means (40, 41, 42) to close the return loop from a state in which the loop is opened due to the saturation detection to a state in which the loop is closed, close the loop by progressively modifying the gain of the return loop to the normal gain.

8. Device according to one of claims 1 to 7, in which in an open loop state after the saturation has been detected, the acceleration is measured in open loop.
